# EUROPEAN PATENT SPECIFICATION

(11) **EP 4 379 830 B1**
(45) Date of publication and mention of the grant of the patent: **17.12.2025**
(21) Application number: 23807733.3
(22) Date of filing: 11.01.2023
(51) Int. Cl.: H01M 4/04, F26B 3/347, F26B 5/04, F26B 13/08, F26B 13/10

(54) **ELECTRODE SHEET DRYING APPARATUS AND ELECTRODE MANUFACTURING SYSTEM USING THE SAME**
ELEKTRODENFOLIENTROCKNUNGSVORRICHTUNG UND ELEKTRODENHERSTELLUNGSSYSTEM DAMIT
DISPOSITIF DE SÉCHAGE DE FEUILLE D'ÉLECTRODE ET SYSTÈME DE FABRICATION D'ÉLECTRODE CORRESPONDANT

(30) Priority: 17.05.2022 KR 20220060203
(43) Date of publication of application: 05.06.2024
(73) Proprietor: LG ENERGY SOLUTION, LTD., Seoul 07335 (KR)
(72) Inventor: SUNG, Jae-Young, Daejeon 34122 (KR); PARK, Joon-Sun, Daejeon 34122 (KR)
(74) Representative: Plasseraud IP
(86) International application number: PCT/KR2023/000526
(87) International publication number: WO 2023/224208

(56) References cited:
- CN-B- 107 530 919
- CN-U- 203 534 076
- CN-U- 216 459 890
- JP-A- 2012 209 074
- JP-A- 2014 107 237
- KR-A- 20210 153 830
- KR-A- 20220 006 350
- KR-A- 20220 030 745
- US-A1- 2005 069 310
- US-A1- 2007 271 812

## Description

### TECHNICAL FIELD

The present application claims priority to Korean Patent Application No. 10-2022-0060203 filed on May 17, 2022 in the Republic of Korea.

The present disclosure relates to an electrode sheet drying apparatus and an electrode manufacturing system using the same, and more particularly, to an electrode sheet drying apparatus for drying a coating material applied to an electrode sheet and an electrode manufacturing system for manufacturing an electrode by using the electrode sheet drying apparatus.

### BACKGROUND ART

In general, an electrode assembly of a secondary battery that may be repeatedly charged and discharged is manufactured by stacking and winding a plurality of stack structures in which a separator is located between a first electrode corresponding to a positive electrode (cathode) and a second electrode corresponding to a negative electrode (anode). In this case, each electrode is manufactured by applying a coating material in a slurry state as a coating material corresponding to a positive electrode active material or a negative electrode active material to an electrode sheet formed of an aluminum or copper material and drying the coating material.

However, as disclosed in Korean Patent No. 10-1725904 and Korean Patent No. 10-1867659, an existing technology of drying an electrode sheet by spraying hot air to the entire electrode sheet through a nozzle and a heater has a problem in that because the amount of heat reaching the electrode sheet may not be controlled for each portion of the electrode sheet, when applied to an actual electrode sheet drying process, an edge portion of the electrode sheet where the amount of coating material loaded is small may be over-dried, thereby resulting in thermal wrinkles or cracks in the edge portion.

CN 216 459 890 U discloses an oven for drying an electrode sheet, which allows to improve the drying rate and prevent curling and cracking by over-rapid drying at the edge portions.

### DISCLOSURE

### Technical Problem

The present disclosure is designed to solve the problems of the related art, and therefore the present disclosure is directed to providing an electrode sheet drying apparatus in which a time of an electrode sheet drying process is reduced and drying efficiency is improved, and electrode coating quality and yield are improved by preventing thermal wrinkles or cracks caused by over-drying of an edge portion of an electrode sheet in an actual electrode sheet drying process.

Also, the present disclosure is directed to providing an electrode manufacturing system in which high coating quality and yield are ensured by using the electrode sheet drying apparatus even when a width of an electrode sheet, a type of a coating material, a drying temperature, or a drying time is changed.
The invention is as defined by the appended claims.

### Technical Solution

In an aspect of the present invention, an electrode sheet drying apparatus for drying an electrode sheet to which a coating material is applied includes a drying structure including a transfer path through which the electrode sheet is transferred, and a plurality of rod-type lamps arranged parallel to each other along the transfer path and configured to radiate electromagnetic waves of a certain wavelength band to the electrode sheet transferred through the transfer path, wherein the plurality of rod-type lamps include a first rod-type lamp having a length sufficient to cover both edge portions of the electrode sheet in a width direction and a central portion between the both edge portions, and a second rod-type lamp having a length less than the length of the first rod-type lamp and sufficient to cover only the central portion of the electrode sheet.

In an embodiment, the electrode sheet drying apparatus may further include a shielding unit configured to shield electromagnetic waves radiated from the second rod-type lamp and traveling to the both edge portions of the electrode sheet.

In an embodiment, the electrode sheet drying apparatus may further include heating units arranged at certain intervals along the transfer path and configured to send hot air to the electrode sheet transferred through the transfer path.

In an embodiment, when the first rod-type lamp and the second rod-type lamp are located between the heating units, both the first rod-type lamp and the second rod-type lamp may be located between the heating units or only one of the first rod-type lamp and the second rod-type lamp may be located between the heating units.

In an embodiment, the plurality of rod-type lamps may further include at least one other rod-type lamp having a length different from the lengths of the first rod-type lamp and the second rod-type lamp.

In an embodiment, the plurality of rod-type lamps may be arranged along the transfer path so that lengths of the rod-type lamps gradually decrease or increase in a transfer direction of the electrode sheet.

In an embodiment, the electrode sheet drying apparatus may further include a controller configured to control electromagnetic wave radiation operations of the plurality of rod-type lamps, wherein the controller is configured to divide the plurality of rod-type lamps into a plurality of lamp groups based on lamp lengths and control electromagnetic wave radiation operations according to the plurality of lamp groups.

In an embodiment, the electrode sheet drying apparatus may further include a width detection sensor configured to detect a width of the electrode sheet, wherein the controller is configured to determine a lamp group whose electromagnetic wave radiation operation is to be performed or stopped from among the plurality of lamp groups by referring to the width of the electrode sheet detected by the width detection sensor.

In an embodiment, the electrode sheet drying apparatus may further include a temperature sensor configured to detect temperatures of at least the both edge portions from among portions of the electrode sheet to be dried, wherein the controller is configured to determine a lamp group whose electromagnetic wave radiation operation is to be performed or stopped from among the plurality of lamp groups by referring to the temperatures of the both edge portions detected by the temperature sensor.

In another aspect of the present disclosure, there is also provided an electrode manufacturing system for manufacturing an electrode by using the electrode sheet drying apparatus.

In an embodiment, the electrode manufacturing system may include a plurality of electrode sheet drying apparatuses, and may further include a first transfer unit configured to, in a first operation mode of the electrode manufacturing system, transfer a first electrode sheet to a first electrode sheet drying apparatus from among the plurality of electrode sheet drying apparatuses and dry the first electrode sheet, and a second transfer unit configured to, in the first operation mode, transfer a second electrode sheet to a second electrode sheet drying apparatus from among the plurality of electrode sheet drying apparatuses and dry the second electrode sheet.

In an embodiment, the electrode manufacturing system may further include a third transfer unit configured to provide an electrode sheet transfer line between the first electrode sheet drying apparatus and the second electrode sheet drying apparatus, wherein, when an operation mode of the electrode manufacturing system changes from the first operation mode to a second operation mode, the first transfer unit is configured to transfer a third electrode sheet to the first electrode sheet drying apparatus and primarily dry the third electrode sheet, and the third transfer unit is configured to transfer the third electrode sheet that is primarily dried to the second electrode sheet drying apparatus and secondarily dry the third electrode sheet.

### Advantageous Effects

According to the present disclosure, because a coating material applied to an electrode sheet is dried by using rod-type lamps that radiate electromagnetic waves in a wavelength band with high energy absorption and the energy of electromagnetic waves reaching the electrode sheet is differentiated for each portion of the electrode sheet by adjusting lengths and arrangement of the rod-type lamps, a time of a drying process may be reduced and drying efficiency may be improved, and electrode coating quality and yield may be improved by preventing thermal wrinkles or cracks caused by over-drying of an edge portion of the electrode sheet in an actual electrode sheet drying process.

Also, because rod-type lamps applied for electrode sheet drying have various lengths, the rod-type lamps are divided into a plurality of lamp groups according to their lengths, and electromagnetic wave radiation operations are adaptively controlled according to the lamp groups by referring to a width of an electrode sheet to be dried or a temperature of an edge portion with a relatively high drying speed, high coating quality and yield may be ensured and construction costs of an electrode manufacturing system may be reduced even when a width of the electrode sheet or a coating material changes.

Also, because an electrode sheet transfer line passing through each of a plurality of electrode sheet drying apparatuses or a modified electrode sheet transfer line sequentially passing through all of the plurality of electrode sheet drying apparatuses is selectively provided, a type of a coating material applied during an electrode manufacturing process, a drying temperature, and a drying time may be changed, and types of products that may be produced with the same manufacturing system may be diversified.

Furthermore, one of ordinary skill in the art will clearly understand from the following description that various embodiments of the present disclosure may also be used to solve various technical problems not mentioned above.

### DESCRIPTION OF DRAWINGS

FIG. 1 is a view illustrating an electrode manufacturing system, according to an embodiment of the present disclosure.
FIG. 2 is a view illustrating an example of an electrode sheet for manufacturing an electrode.
FIG. 3 is a view illustrating an arrangement of rod-type lamps of an electrode sheet drying apparatus, according to an embodiment of the present disclosure.
FIG. 4 is a view illustrating an arrangement of rod-type lamps of an electrode sheet drying apparatus, according to a modified embodiment of the present disclosure.
FIG. 5 is a view illustrating an arrangement of rod-type lamps of an electrode sheet drying apparatus, according to another modified embodiment of the present disclosure.
FIG. 6 is a view illustrating an electrode manufacturing system, according to a modified embodiment of the present disclosure.
FIG. 7 is a view illustrating a state where an operation mode of the electrode manufacturing system of FIG. 6 changes.

### BEST MODE

Hereinafter, embodiments of the present disclosure will be described in detail with reference to the accompanying drawings to provide solutions to the technical problems of the present disclosure. However, in the description of the present disclosure, detailed explanations of related known technologies are omitted when it is deemed that they may unnecessarily obscure the essence of the present disclosure.

Also, the terms used herein are those defined in consideration of functions in the present disclosure, and may vary according to the intention of designers or manufacturers, precedents, etc. Hence, the terms used herein should be defined based on the meaning of the terms together with the descriptions throughout the specification. For reference, the same reference numerals used in different drawings of the present specification denote the same elements.

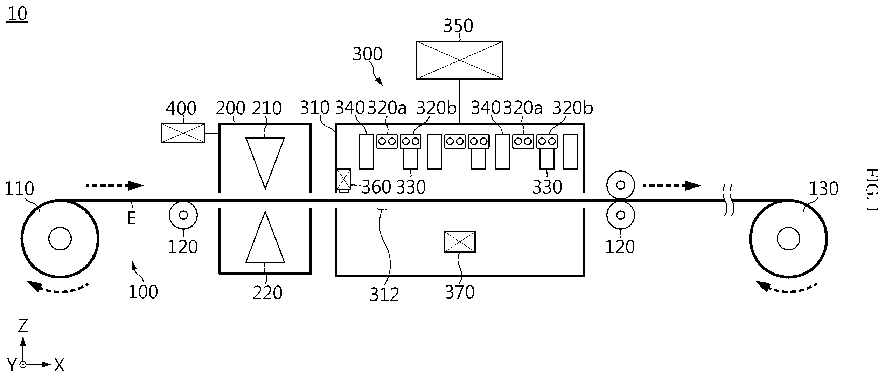

FIG. 1 illustrates an electrode manufacturing system 10, according to an embodiment of the present disclosure.

As shown in FIG. 1, the electrode manufacturing system 10 according to an embodiment of the present disclosure may include a transfer unit 100, a coating unit 200, and an electrode sheet drying apparatus 300 according to the present invention, and may further include a coating material detection sensor 400 according to an embodiment.

The transfer unit 100 may be configured to transfer an electrode sheet E to be used to manufacture an electrode to the electrode sheet drying apparatus 300. To this end, the transfer unit 100 may include an unwinding unit 110, a transfer roller 120, and a rewinding unit 130.

The unwinding unit 110 may be generally configured to unwind and move the electrode sheet E wound in a roll shape. In this case, the unwinding portion 110 may include a wheel to which the electrode sheet E wound in a roll shape is fixed, and a motor (not shown) for unwinding the electrode sheet E fixed to the wheel by rotating the wheel in a pre-determined direction and at a pre-determined speed. In the present specification, the term 'electrode sheet' may refer to any of various sheets used to manufacture an electrode assembly of a secondary battery, such as a sheet for manufacturing a positive electrode, a sheet for manufacturing a negative electrode, or a sheet for manufacturing a separator.

The transfer roller 120 may be located at any of various positions in the electrode manufacturing system 10 to smoothly move the electrode sheet E.

The rewinding unit 130 may be configured to rewind the electrode sheet E dried by the electrode sheet drying apparatus 300. To this end, the rewinding unit 130 may include a wheel for rewinding the dried electrode sheet E, and a motor (not shown) for rewinding the dried electrode sheet E by rotating the wheel in a pre-determined direction and at a pre-determined speed.

The coating unit 200 may be configured to apply a coating material to one surface or both surfaces of the electrode sheet E unwound by the unwinding unit 110 and moving to the electrode sheet drying apparatus 300. To this end, the coating unit 200 may include a first coater 210 for coating a certain coating material to one surface of the electrode sheet E, and a second coater 220 for coating a certain coating material to the other surface of the electrode sheet E.

A positive electrode of the secondary battery is a source that emits lithium ions while the secondary battery is charged, and may be used to determine a capacity and a voltage of the secondary battery. The positive electrode may be manufactured by applying a coating material including a positive electrode active material, a conductive agent, and a binder to an electrode sheet formed of an Al material and drying the coating material. Any of various materials such as LiCoO₂, LiMn₂O₄, LiFePO₄, LiNiCoAlO₂, LiNiMnCoO₂, or Li₂TiO₃ may be used as the positive electrode active material.

A negative electrode of the secondary battery stores lithium ions while the secondary battery is charged, and may be used to determine a charging speed of the secondary battery. The negative electrode may be manufactured by applying a coating material including a negative electrode active material, a conductive agent, and a binder to an electrode sheet formed of a Cu material and drying the coating material. Any of various materials such as natural graphite, artificial graphite, or low-crystalline carbon may be used as the negative electrode active material.

A separator of the secondary battery is a key element for ensuring the safety of the secondary battery, and may be located between the positive electrode and the negative electrode to block contact between the positive electrode and the negative electrode and allow lithium ions to pass therethrough. The separator may be manufactured by applying a coating material including a ceramic material to a surface of a sheet formed of polyethylene (PE) or polypropylene (PP) and drying the coating material.

The electrode sheet drying apparatus 300 according to the present disclosure may be configured to dry the electrode sheet E to which a coating material is applied as described above in such a manner that an edge portion of the electrode sheet E is not over-dried.

To this end, the electrode sheet drying apparatus 300 according to the present disclosure may include a drying structure 310 and a plurality of rod-type lamps 320a, 320b, and may further include at least one of a shielding unit 330, a heating unit 340, a controller 350, a width detection sensor 360, and a temperature sensor 370 according to an embodiment.

The drying structure 310 corresponds to a body of the electrode sheet drying apparatus 300 and may include a transfer path 312 through which the electrode sheet E is transferred.

The plurality of rod-type lamps 320a, 320b may be arranged parallel to each other along the transfer path 312 of the drying structure 310, and may each be configured to radiate electromagnetic waves of a certain wavelength band to the electrode sheet E transferred through the transfer path 312. In this case, the plurality of rod-type lamps 320a, 320b may each extend in a width direction of the electrode sheet E transferred in a longitudinal direction.

Also, the plurality of rod-type lamps 320a, 320b may include medium wave infrared (MIR) lamps for radiating mid-infrared rays in a wavelength band of 1400 nm to 3000 nm.

In particular, the plurality of rod-type lamps 320a, 320b may include rod-type lamps having various lengths.

In an embodiment, the plurality of rod-type lamps 320a, 320b may include at least one first rod-type lamp 320a having a length sufficient to cover both edge portions of the electrode sheet E in the width direction and a central portion between the both edge portions and at least one second rod-type lamp 320b having a length less than that of the first rod-type lamp 320a and sufficient to cover only the central portion of the electrode sheet E. In this case, the first rod-type lamp 320a may radiate electromagnetic waves to the entire electrode sheet E including the both edge portions and the central portion of the electrode sheet E in the width direction. In contrast, the second rod-type lamp 320b may radiate electromagnetic waves only to the central portion except for the both edge portions in the width direction of the electrode sheet E.

For example, when a width of the electrode sheet E is about 1400 mm, the first rod-type lamp 320a may have a length ranging from 1400 mm to 1600 mm and the second rod-type lamp 320b may have a length ranging from 600 mm to 700 mm.

Also, the first rod-type lamp 320a and the second rod-type lamp 320b may be MIR lamps for radiating mid-infrared rays belonging to a wavelength band of 1400 nm to 6000 nm.

Also, the plurality of rod-type lamps 320a, 320b may include a plurality of first rod-type lamps 320a and a plurality of second rod-type lamps 320b.

According to an embodiment, the electrode sheet drying apparatus 300 may further include at least one other rod-type lamp having a length different from those of the first rod-type lamp 320a and the second rod-type lamp 320b.

As described above, the electrode sheet drying apparatus 300 according to the present disclosure may selectively further include at least one of the shielding unit 330, the heating unit 340, the controller 350, the width detection sensor 360, and the temperature sensor 370 according to an embodiment.

The shielding unit 330 may be configured to shield electromagnetic waves radiated from the second rod-type lamp 350b and traveling to the both edge portions of the electrode sheet E in the width direction.

In an embodiment, the shielding unit 330 may include a shielding plate. In this case, the shielding plates may be provided on both ends of the second rod-type lamp 320b in a longitudinal direction of the second rod-type lamp 320b, to shield electromagnetic waves radiated from the second rod-type lamp 320b to the both edge portions of the electrode sheet E in the width direction.

In another embodiment, the shielding unit 330 may further include an inclination adjusting means (not shown) for adjusting an inclination of the shielding plate. In this case, the inclination adjusting means may be configured to change a radiation range of electromagnetic waves radiated from the second rod-type lamp 320b by adjusting an inclination of the shielding plate.

The heating unit 340 may be configured to send hot air to the electrode sheet E transferred through the transfer path 312 of the drying structure 310. To this end, the heating unit 340 may include a nozzle through which hot air generated by a heater and a fan is sent toward the electrode sheet E.

In an embodiment, the electrode sheet drying apparatus 300 may include a plurality of heating units 340. The heating units may be arranged parallel to each other at regular intervals along the transfer path 312 of the drying structure 310.

In this case, as shown in FIG. 1, when the first rod-type lamp 320a and the second rod-type lamp 320b are located between the heating units, both the first rod-type lamp 320a and the second rod-type lamp 320b may be located between the heating units.

As described again below, when the first rod-type lamp 320a and the second rod-type lamp 320b are located between the heating units, the first rod-type lamp 320a and the second rod-type lamp 320b may be alternately located, that is, only one of the first rod-type lamp 320a and the second rod-type lamp 320b may be located between the heating units.

For reference, although the rod-type lamps, the shielding units, and the heating units are arranged only in an upper portion of the transfer path 312 in FIG. 1, the rod-type lamps, the shielding units, and the heating units may also be arranged in a lower portion of the transfer path 312 according to an embodiment.

The controller 350 may be configured to control an operation of the electrode sheet drying apparatus 300. In particular, the controller 350 may be configured to control electromagnetic wave radiation operations of the rod-type lamps located in the transfer path 312 of the drying structure 310.

In an embodiment, the controller 350 may be configured to divide the rod-type lamps located in the transfer path 312 of the drying structure 310 into a plurality of lamp groups based on lamp lengths and control electromagnetic wave radiation operations according to the lamp groups.

To this end, the controller 350 may selectively include hardware such as a general-purpose processor for executing a control logic, an application-specific integrated circuit (ASIC), another chipset, a logic circuit, a register, or a memory. Also, the controller 350 may include a combination of software such as a computer program and the hardware. That is, the control logic of the controller 350 may include a computer program and may be stored in the memory of the controller 350 or in an external memory, and the stored computer program may be executed through the hardware of the controller 350.

The width detection sensor 360 may be configured to detect a width of the electrode sheet E passing through the transfer path 312 of the drying structure 310. To this end, the width detection sensor 360 may include an optical sensor array or may include any of various sensors for detecting a width of the electrode sheet E.

In an embodiment, the controller 350 may be configured to determine a lamp group whose electromagnetic wave radiation operation is to be performed or stopped from among the plurality of lamp groups by referring to the width of the electrode sheet E detected by the width detection sensor 360.

The temperature sensor 370 may be configured to detect temperatures of at least the both edge portions in the width direction from among portions of the electrode sheet E to be dried in the transfer path 312 of the drying structure 310. For example, the temperature sensor 370 may be configured to measure a temperature in a non-contact manner by using an infrared sensor, but the present disclosure is not limited thereto.

In an embodiment, the controller 350 may be configured to determine a lamp group whose electromagnetic wave radiation operation is to be performed or stopped from among the plurality of lamp groups by referring to the temperatures of the both edge portions of the electrode sheet E detected by the temperature sensor 370.

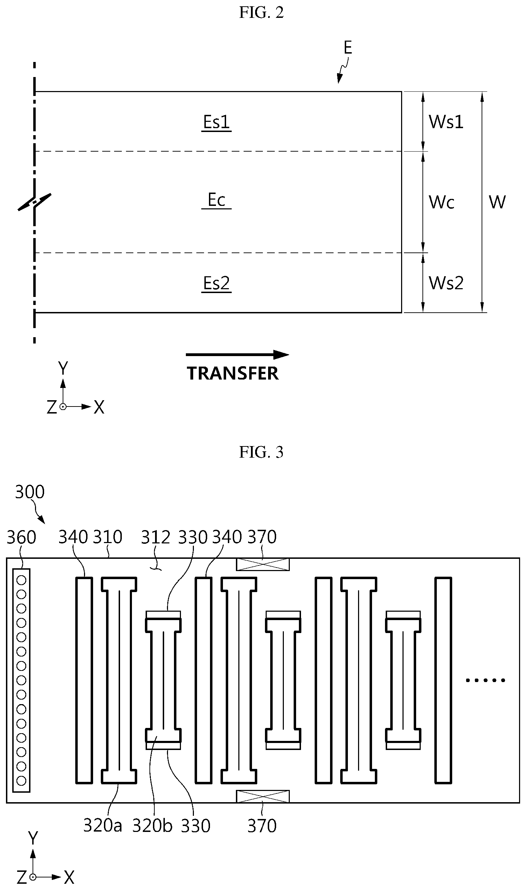

FIG. 2 illustrates an example of an electrode sheet for manufacturing an electrode.

As shown in FIG. 2, the electrode sheet E used to manufacture an electrode is unwound from a wound state in a roll shape, is transferred in a longitudinal direction (X-axis direction), and is subjected to a coating material application and drying process.

When both edge portions Es1, Es2 of the electrode sheet E in a direction of a width W and a central portion Ec located between the both edge portions Es1, Es2 are dried at the same temperature, the both edge portions Es1, Es2 are more rapidly dried than the central portion Ec and are over-dried. This is because the amount of coating material loaded on the both edge portions Es1, Es2 is less than that on the central portion Ec and the both edge portions Es1, Es2 are heated faster than the central portion Ec. The over-drying of the both edge portions Es1, Es2 causes thermal wrinkles or cracks in the both edge portions Es1, Es2.

To solve the problems, the electrode sheet drying apparatus 300 according to the present disclosure may adjust the amount of electromagnetic energy transmitted to the both edge portions Es1, Es2 of the electrode sheet E in the direction of the width W by drying the electrode sheet E by using rod-type lamps having various lengths.

For example, from among the rod-type lamps arranged parallel to each other along the transfer path 312 of the drying structure 310, some lamps may be the first rod-type lamps 320a each having a length sufficient to cover widths Ws1, Ws2 of the both edge portions and a width Wc of the central portion corresponding to the entire width W of the electrode sheet E and other lamps may be the second rod-type lamps 320b each having a length sufficient to cover only the width Wc of the central portion of the electrode sheet.

FIG. 3 illustrates an arrangement of rod-type lamps of the electrode sheet drying apparatus 300, according to an embodiment of the present disclosure.

As shown in FIG. 3, the transfer path 312 through which an electrode sheet is transferred may be provided in the drying structure 310 of the electrode sheet drying apparatus 300 according to an embodiment of the present disclosure. As described above, a plurality of first rod-type lamps 320a, a plurality of second rod-type lamps 320b, and a plurality of heating units 340 may be located in the transfer path 312 of the drying structure 310, and the shielding unit 330, the width detection sensor 360, and the temperature sensor 370 may be further located.

In this case, the heating units may be arranged parallel to each other at regular intervals along the transfer path 312. Also, when the first rod-type lamp 320a and the second rod-type lamp 320b are located between the heating units, both the first rod-type lamp 320a and the second rod-type lamp 320b may be located between the heating units.

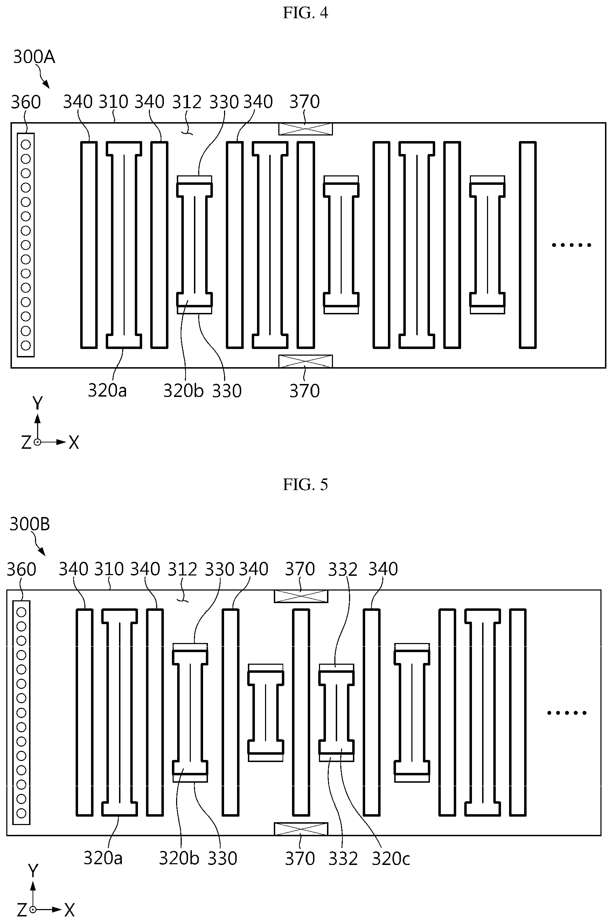

FIG. 4 illustrates an arrangement of rod-type lamps of an electrode sheet drying apparatus 300A, according to a modified embodiment of the present disclosure.

As shown in FIG. 4, the transfer path 312 through which an electrode sheet is transferred may be provided in the drying structure 310 of the electrode sheet drying apparatus 300A according to a modified embodiment of the present disclosure. As described above, a plurality of first rod-type lamps 320a, a plurality of second rod-type lamps 320b, and a plurality of heating units 340 may be located in the transfer path 312 of the drying structure 310, and the shielding unit 330, the width detection sensor 360, and the temperature sensor 370 may be further located.

**In** this case, the heating units may be arranged parallel to each other at regular intervals along the transfer path 312. Also, when the first rod-type lamp 320a and the second rod-type lamp 320b are located between the heating units, the first rod-type lamp 320a and the second rod-type lamp 320b may be alternately located, that is, only one of the first rod-type lamp 320a and the second rod-type lamp 320b may be located between the heating units.

FIG. 5 illustrates an arrangement of rod-type lamps of an electrode sheet drying apparatus 300B, according to another modified embodiment of the present disclosure.

As shown in FIG. 5, the electrode sheet drying apparatus 300B according to another modified embodiment of the present disclosure may further include at least one third rod-type lamp 320c having a length different from those of the first rod-type lamp 320a and the second rod-type lamp 320b. Also, the electrode sheet drying apparatus 300B may further include a shielding unit 322 for shielding electromagnetic waves radiated from the third rod-type lamp 320c and travelling toward both edge portions of an electrode sheet in a width direction (Y-axis direction).

The transfer path 312 through which the electrode sheet is transferred may be provided in the drying structure 310 of the electrode sheet drying apparatus 300B. As described above, a plurality of first rod-type lamps 320a, a plurality of second rod-type lamps 320b, a plurality of third rod-type lamps 320c, and a plurality of heating units 340 may be located in the transfer path 312 of the drying structure 310, and the shielding unit 330, the width detection sensor 360, and the temperature sensor 370 may be further located. For reference, the third rod-type lamp 320c may have a length less than that of the second rod-type lamp 320b.

In this case, the heating units may be arranged parallel to each other at regular intervals along the transfer path 312. Also, when the first rod-type lamp 320a, the second rod-type lamp 320b, and the third rod-type lamp 320c are located between the heating units, the first rod-type lamp 320a, the second rod-type lamp 320b, and the third rod-type lamp 320c may be alternately located, that is, only one of the first to third rod-type lamps 320a, 320b, 320c may be located between the heating units.

In an embodiment, the first rod-type lamp 320a, the second rod-type lamp 320b, and the third rod-type lamp 320c may be arranged so that lengths of the rod-type lamps located along the transfer path 312 gradually decrease or increase in a transfer direction (X-axis direction) of the electrode sheet.

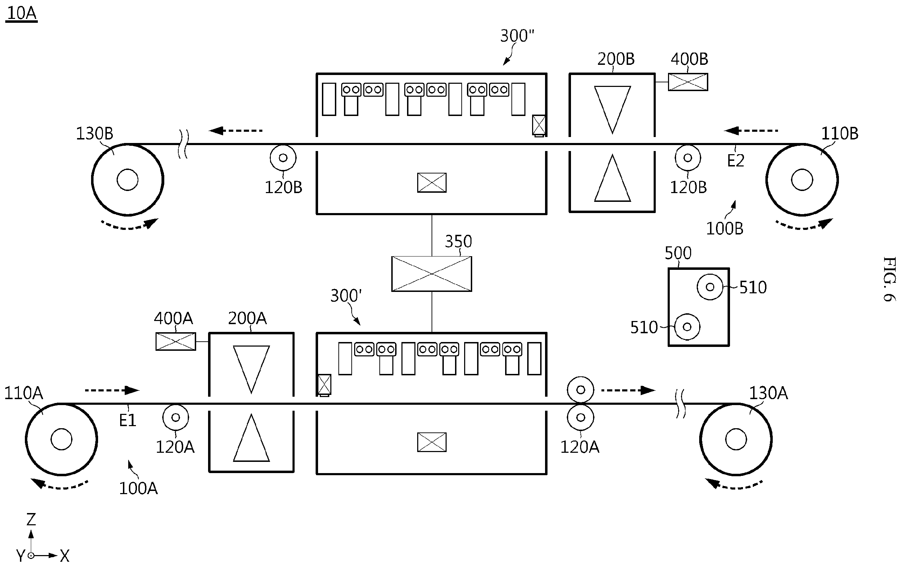

FIG. 6 illustrates an electrode manufacturing system 10A, according to a modified embodiment of the present disclosure.

As shown in FIG. 6, the electrode manufacturing system 10A according to a modified embodiment of the present disclosure may be configured to manufacture an electrode by using a plurality of electrode sheet drying apparatuses 300', 300". In particular, the electrode manufacturing system 10A may be configured to change an operation mode.

To this end, the electrode manufacturing system 10A may include a first transfer unit 100A, a first coating unit 200A, a first electrode sheet drying apparatus 300', a first coating material detection sensor 400A, a second transfer unit 100B, a second coating unit 200B, a second electrode sheet drying apparatus 300'', a second coating material detection sensor 400B, and a third transfer unit 500.

In this case, the first and second transfer units 100A, 100B correspond to the transfer unit 100 of FIG. 1 in detailed configurations and functions, the first and second coating units 200A, 200B correspond to the coating unit 200 of FIG. 1 in detailed configurations and functions, the first and second electrode sheet drying apparatuses 300', 300" correspond to the electrode sheet drying apparatus 300 of FIG. 1 in detailed configurations and functions, and the first and second coating material detection sensors 400A, 400B correspond to the coating material detection sensor 400 of FIG. 1 in detailed configurations and functions. However, the first and second electrode sheet drying apparatuses 300', 300'' may be controlled by one controller 350.

In a first operation mode of the electrode manufacturing system 10A, an unwinding unit 110A, a transfer roller 120A, and a rewinding unit 130A of the first transfer unit 100A may be configured to transfer a first electrode sheet E1 wound in a roll shape to the first electrode sheet drying apparatus 300' from among a plurality of electrode sheet drying apparatuses and dry the first electrode sheet E1.

Also, in the first operation mode, an unwinding unit 110B, a transfer roller 120B, and a rewinding unit 130B of the second transfer unit 100B may be configured to transfer a second electrode sheet E2 wound in a roll shape separate from the first electrode sheet E1 to the second electrode sheet drying apparatus 300" from among the plurality of electrode sheet drying apparatuses and dry the second electrode sheet E2.

The third transfer unit 500 may be configured to provide an electrode sheet transfer line between the first electrode sheet drying apparatus 300' and the second electrode sheet drying apparatus 300". To this end, the third transfer unit 500 may include a bypass roller 510 for transferring an electrode sheet that is primarily dried in the first electrode sheet drying apparatus 300' to the second electrode sheet drying apparatus 300".

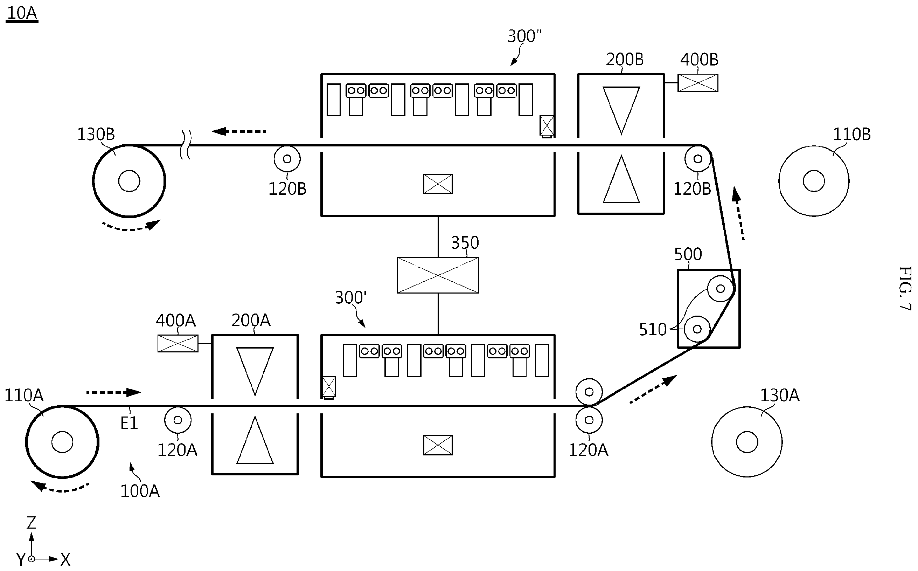

FIG. 7 illustrates a state where an operation mode of the electrode manufacturing system 10A of FIG. 6 changes.

As shown in FIG. 7, when an operation mode of the electrode manufacturing system 10A changes from the first operation mode to a second operation mode, the first transfer unit 100A may be configured to transfer a third electrode sheet E1 to the first electrode sheet drying apparatus 300' and primarily dry the third electrode sheet E1, and the third transfer unit 500 may be configured to transfer the third electrode sheet E1 that is primarily dried to the second electrode sheet drying apparatus 300" and secondarily dry the third electrode sheet E1.

In this case, the unwinding unit 110A and the transfer roller 120A of the first transfer unit 100A may operate in the same manner as in the first operation mode, but the rewinding unit 130A of the first transfer unit 100A may stop its operation. Also, the unwinding unit 110B of the second transfer unit 100B stops its operation, but the transfer roller 120B and the rewinding unit 130B of the second transfer unit 100B may operate in the same manner as in the first operation mode.

As described above, according to the present disclosure, because a coating material applied to an electrode sheet is dried by using rod-type lamps that radiate electromagnetic waves in a wavelength band with high energy absorption and the energy of electromagnetic waves reaching the electrode sheet is differentiated for each portion of the electrode sheet by adjusting lengths and arrangement of the rod-type lamps, a time of a drying process may be reduced and drying efficiency may be improved, and electrode coating quality and yield may be improved by preventing thermal wrinkles or cracks caused by over-drying of an edge portion of the electrode sheet in an actual electrode sheet drying process.

Also, because rod-type lamps applied for electrode sheet drying have various lengths, the rod-type lamps are divided into a plurality of lamp groups according to their lengths, and electromagnetic wave radiation operations are adaptively controlled according to the lamp groups by referring to a width of an electrode sheet to be dried or a temperature of an edge portion with a relatively high drying speed, high coating quality and yield may be ensured and construction costs of an electrode manufacturing system may be reduced even when a width of the electrode sheet or a coating material changes.

Also, because an electrode sheet transfer line passing through each of a plurality of electrode sheet drying apparatuses or a modified electrode sheet transfer line sequentially passing through all of the plurality of electrode sheet drying apparatuses is selectively provided, a type of a coating material applied during an electrode manufacturing process, a drying temperature, and a drying time may be changed, and types of products that may be produced with the same manufacturing system may be diversified.

## Claims

1. An electrode sheet drying apparatus for drying an electrode sheet to which a coating material is applied, the electrode sheet drying apparatus comprising:
a drying structure comprising a transfer path (312) through which the electrode sheet (E) is transferred; and
a plurality of rod-type lamps (320a, 320b) arranged parallel to each other along the transfer path (312) and configured to radiate electromagnetic waves of a certain wavelength band to the electrode sheet (E) transferred through the transfer path (312),
**characterized in that** the plurality of rod-type lamps (320a, 320b) comprises:
a first rod-type lamp (320a) having a length sufficient to cover both edge portions of the electrode sheet (E) in a width direction and a central portion between the both edge portions; and
a second rod-type lamp (320b) having a length less than the length of the first rod-type lamp (320a) and sufficient to cover only the central portion of the electrode sheet (E).

2. The electrode sheet drying apparatus according to claim 1, further comprising a shielding unit (330) configured to shield electromagnetic waves radiated from the second rod-type lamp (320b) and traveling to the both edge portions of the electrode sheet (E).

3. The electrode sheet drying apparatus according to claim 1, further comprising heating units arranged at certain intervals along the transfer path (312) and configured to send hot air to the electrode sheet (E) transferred through the transfer path (312).

4. The electrode sheet drying apparatus according to claim 3, wherein, when the first rod-type lamp (320a) and the second rod-type lamp (320b) are located between the heating units, both the first rod-type lamp (320a) and the second rod-type lamp (320b) are located between the heating units or only one of the first rod-type lamp (320a) and the second rod-type lamp (320b) is located between the heating units.

5. The electrode sheet drying apparatus according to claim 1, wherein the plurality of rod-type lamps (320a, 320b) further comprise at least one other rod-type lamp having a length different from the lengths of the first rod-type lamp (320a) and the second rod-type lamp (320b).

6. The electrode sheet drying apparatus according to claim 5, wherein the plurality of rod-type lamps (320a, 320b) are arranged along the transfer path (312) so that lengths of the rod-type lamps (320a, 320b) gradually decrease or increase in a transfer direction of the electrode sheet (E).

7. The electrode sheet drying apparatus according to claim 1, further comprising a controller (350) configured to control electromagnetic wave radiation operations of the plurality of rod-type lamps (320a, 320b),
wherein the controller (350) is configured to divide the plurality of rod-type lamps (320a, 320b) into a plurality of lamp groups based on lamp lengths and control electromagnetic wave radiation operations according to the plurality of lamp groups.

8. The electrode sheet drying apparatus according to claim 7, further comprising a width detection sensor (360) configured to detect a width of the electrode sheet (E),
wherein the controller (350) is configured to determine a lamp group whose electromagnetic wave radiation operation is to be performed or stopped from among the plurality of lamp groups by referring to the width of the electrode sheet (E) detected by the width detection sensor (360).

9. The electrode sheet drying apparatus according to claim 7, further comprising a temperature sensor (370) configured to detect temperatures of at least the both edge portions from among portions of the electrode sheet (E) to be dried,
wherein the controller (350) is configured to determine a lamp group whose electromagnetic wave radiation operation is to be performed or stopped from among the plurality of lamp groups by referring to the temperatures of the both edge portions detected by the temperature sensor (370).

10. An electrode manufacturing system for manufacturing an electrode by using the electrode sheet drying apparatus according to any one of claims 1 to 9.

11. The electrode manufacturing system (10A) according to claim 10, wherein the electrode manufacturing system (10A) comprises a plurality of electrode sheet drying apparatuses (300', 300''), and further comprises:
a first transfer unit (100A) configured to, in a first operation mode of the electrode manufacturing system, transfer a first electrode sheet (E1) to a first electrode sheet drying apparatus (300') from among the plurality of electrode sheet drying apparatuses and dry the first electrode sheet (E1); and
a second transfer unit (100B) configured to, in the first operation mode, transfer a second electrode sheet (E2) to a second electrode sheet drying apparatus (300") from among the plurality of electrode sheet drying apparatuses and dry the second electrode sheet (E2).

12. The electrode manufacturing system according to claim 11, further comprising a third transfer unit (500) configured to provide an electrode sheet transfer line between the first electrode sheet drying apparatus (300') and the second electrode sheet drying apparatus (300"),
wherein, when an operation mode of the electrode manufacturing system changes from the first operation mode to a second operation mode, the first transfer unit (100A) is configured to transfer a third electrode sheet to the first electrode sheet drying apparatus (300') and primarily dry the third electrode sheet, and the third transfer unit (500) is configured to transfer the third electrode sheet that is primarily dried to the second electrode sheet drying apparatus (300") and secondarily dry the third electrode sheet.

## Patentansprüche

1. Elektrodenbahn-Trocknungsvorrichtung zum Trocknen einer Elektrodenbahn, auf welche ein Beschichtungsmaterial aufgebracht ist, wobei die Elektrodenbahn-Trocknungsvorrichtung umfasst:
eine Trocknungsstruktur, welche einen Transferpfad (312) umfasst, durch welchen die Elektrodenbahn (E) transferiert wird; und
eine Mehrzahl von stabartigen Lampen (320a, 320b), welche parallel zueinander entlang des Transferpfads (312) angeordnet und dazu eingerichtet sind,
elektromagnetische Wellen eines bestimmten Wellenlängenbands auf die Elektrodenbahn (E) einzustrahlen, welche durch den Transferpfad (312) transferiert wird,
**dadurch gekennzeichnet, dass** die Mehrzahl von stabartigen Lampen (320a, 320b) umfasst:
eine erste stabartige Lampe (320a), welche eine Länge aufweist, welche ausreichend ist, um beide Randabschnitte der Elektrodenbahn (E) in einer Breitenrichtung und einen zentralen Abschnitt zwischen den beiden Randabschnitten zu bedecken; und
eine zweite stabartige Lampe (320b), welche eine Länge aufweist, welche geringer als die Länge der ersten stabartigen Lampe (320a) ist und ausreichend ist, um lediglich den zentralen Abschnitt der Elektrodenbahn (E) zu bedecken.

2. Elektrodenbahn-Trocknungsvorrichtung nach Anspruch 1, ferner umfassend eine Abschirmeinheit (330), welche dazu eingerichtet ist, elektromagnetische Wellen abzuschirmen, welche von der zweiten stabartigen Lampe (320b) abgestrahlt werden und sich zu beiden Randabschnitten der Elektrodenbahn (E) bewegen.

3. Elektrodenbahn-Trocknungsvorrichtung nach Anspruch 1, ferner umfassend Heizeinheiten, welche bei bestimmten Intervallen entlang des Transferpfads (312) angeordnet und dazu eingerichtet sind, heiße Luft zu der Elektrodenbahn (E) zu schicken, welche durch den Transferpfad (312) transferiert wird.

4. Elektrodenbahn-Trocknungsvorrichtung nach Anspruch 3, wobei, wenn die erste stabartige Lampe (320a) und die zweite stabartige Lampe (320b) zwischen den Heizeinheiten angeordnet sind, sowohl die erste stabartige Lampe (320a) als auch die zweite stabartige Lampe (320b) zwischen den Heizeinheiten angeordnet sind, oder lediglich eine aus der ersten stabartigen Lampe (320a) und der zweiten stabartigen Lampe (320b) zwischen den Heizeinheiten angeordnet ist.

5. Elektrodenbahn-Trocknungsvorrichtung nach Anspruch 1, wobei die Mehrzahl von stabartigen Lampen (320a, 320b) ferner wenigstens eine weitere stabartige Lampe umfassen, welche eine Länge aufweist, welche verschieden von den Längen der ersten stabartigen Lampe (320a) und der zweiten stabartigen Lampe (320b) ist.

6. Elektrodenbahn-Trocknungsvorrichtung nach Anspruch 5, wobei die Mehrzahl von stabartigen Lampen (320a, 320b) entlang des Transferpfads (312) angeordnet sind, so dass Längen der stabartigen Lampen (320a, 320b) graduell in einer Transferrichtung der Elektrodenbahn (E) abnehmen oder zunehmen.

7. Elektrodenbahn-Trocknungsvorrichtung nach Anspruch 1, ferner umfassend eine Steuereinheit (350), welche dazu eingerichtet ist, elektromagnetische Wellenausstrahlung-Vorgänge der Mehrzahl von stabartigen Lampen (320a, 320b) zu steuern,
wobei die Steuereinheit (350) dazu eingerichtet ist, die Mehrzahl von stabartigen Lampen (320a, 320b) in eine Mehrzahl von Lampengruppen auf Grundlage von Lampenlängen zu unterteilen und elektromagnetische Wellenausstrahlung-Vorgänge gemäß der Mehrzahl von Lampengruppen zu steuern.

8. Elektrodenbahn-Trocknungsvorrichtung nach Anspruch 7, ferner umfassend einen Breiten-Detektionssensor (360), welcher dazu eingerichtet ist, eine Breite der Elektrodenbahn (E) zu detektieren,
wobei die Steuereinheit (350) dazu eingerichtet ist, eine Lampengruppe zu bestimmen, deren elektromagnetischer Wellenausstrahlung-Vorgang durchgeführt oder gestoppt werden soll, unter der Mehrzahl von Lampengruppen, durch Bezugnahme auf die Breite der Elektrodenbahn (E), welche durch den Breiten-Detektionssensor (360) detektiert wird.

9. Elektrodenbahn-Trocknungsvorrichtung nach Anspruch 7, ferner umfassend einen Temperatursensor (370), welcher dazu eingerichtet ist, Temperaturen von wenigstens den beiden Randabschnitten unter Abschnitten der zu trocknenden Elektrodenbahn (E) zu detektieren,
wobei die Steuereinheit (350) dazu eingerichtet ist, eine Lampengruppe zu bestimmen, deren elektromagnetischer Wellenausstrahlung-Vorgang durchgeführt oder gestoppt werden soll, unter der Mehrzahl von Lampengruppen, durch Bezugnahme auf die Temperaturen der beiden Randabschnitte, welche durch den Temperatursensor (370) detektiert werden.

10. Elektroden-Herstellungssystem zum Herstellen einer Elektrode durch Verwenden der Elektrodenbahn-Trocknungsvorrichtung nach einem der Ansprüche 1 bis 9.

11. Elektroden-Herstellungssystem (10A) nach Anspruch 10, wobei das Elektroden-Herstellungssystem (10A) eine Mehrzahl von Elektrodenbahn-Trocknungsvorrichtungen (300', 300") umfasst und ferner umfasst:
eine erste Transfereinheit (100A), welche dazu eingerichtet ist, in einem ersten Betriebsmodus des Elektroden-Herstellungssystems eine erste Elektrodenbahn (E1) zu einer ersten Elektrodenbahn-Trocknungsvorrichtung (300') unter der Mehrzahl von Elektrodenbahn-Trocknungsvorrichtungen zu transferieren und die erste Elektrodenbahn (E1) zu trocknen; und
eine zweite Transfereinheit (100B), welche dazu eingerichtet ist, in dem ersten Betriebsmodus eine zweite Elektrodenbahn (E2) zu einer zweiten Elektrodenbahn-Trocknungsvorrichtung (300") unter der Mehrzahl von Elektrodenbahn-Trocknungsvorrichtungen zu transferieren und die zweite Elektrodenbahn (E2) zu trocknen.

12. Elektroden-Herstellungssystem nach Anspruch 11, ferner umfassend eine dritte Transfereinheit (500), welche dazu eingerichtet ist, eine Elektrodenbahn-Transferlinie zwischen der ersten Elektrodenbahn-Trocknungsvorrichtung (300') und der zweiten Elektrodenbahn-Trocknungsvorrichtung (300") bereitzustellen, wobei, wenn sich ein Betriebsmodus des Elektroden-Herstellungssystems von dem ersten Betriebsmodus zu einem zweiten Betriebsmodus ändert, die erste Transfereinheit (100A) dazu eingerichtet ist, eine dritte Elektrodenbahn zu der ersten Elektrodenbahn-Trocknungsvorrichtung (300') zu transferieren und primär die dritte Elektrodenbahn zu trocknen, und die dritte Transfereinheit (500) dazu eingerichtet ist, die dritte Elektrodenbahn, welche primär getrocknet worden ist, zu der zweiten Elektrodenbahn-Trocknungsvorrichtung (300") zu transferieren und die dritte Elektrodenbahn sekundär zu trocknen.

## Revendications

1. Appareil de séchage de feuille d'électrode pour sécher une feuille d'électrode sur laquelle un matériau de revêtement est appliqué, l'appareil de séchage de feuille d'électrode comprenant :
une structure de séchage comprenant un trajet de transfert (312) à travers lequel la feuille d'électrode (E) est transférée ; et
une pluralité de lampes de type tige (320a, 320b) disposées parallèlement les unes aux autres le long du trajet de transfert (312) et conçues pour émettre des ondes électromagnétiques d'une certaine bande de longueur d'onde vers la feuille d'électrode (E) transférée à travers le trajet de transfert (312),
**caractérisé en ce que** la pluralité de lampes de type tige (320a, 320b) comprend :
une première lampe de type tige (320a) ayant une longueur suffisante pour recouvrir les deux parties de bord de la feuille d'électrode (E) dans une direction de largeur et une partie centrale entre les deux parties de bord ; et
une seconde lampe de type tige (320b) ayant une longueur inférieure à la longueur de la première lampe de type tige (320a) et suffisante pour recouvrir uniquement la partie centrale de la feuille d'électrode (E).

2. Appareil de séchage de feuille d'électrode selon la revendication 1, comprenant en outre une unité de protection (330) conçue pour protéger contre les ondes électromagnétiques émises par la seconde lampe de type tige (320b) et se déplaçant vers les deux bords de la feuille d'électrode (E).

3. Appareil de séchage de feuille d'électrode selon la revendication 1, comprenant en outre des unités de chauffage disposées à certains intervalles le long du trajet de transfert (312) et conçues pour envoyer de l'air chaud à la feuille d'électrode (E) transférée à travers le trajet de transfert (312).

4. Appareil de séchage de feuille d'électrode selon la revendication 3, dans lequel, lorsque la première lampe de type tige (320a) et la seconde lampe de type tige (320b) sont situées entre les unités de chauffage, la première lampe de type tige (320a) et la seconde lampe de type tige (320b) se trouvent toutes deux entre les unités de chauffage, ou seulement l'une parmi la première lampe de type tige (320a) et la seconde lampe de type tige (320b) est située entre les unités de chauffage.

5. Appareil de séchage de feuille d'électrode selon la revendication 1, dans lequel la pluralité de lampes de type tige (320a, 320b) comprend en outre au moins une autre lampe de type tige ayant une longueur différente des longueurs de la première lampe de type tige (320a) et de la seconde lampe de type tige (320b).

6. Appareil de séchage de feuille d'électrode selon la revendication 5, dans lequel la pluralité de lampes de type tige (320a, 320b) sont disposées le long du trajet de transfert (312) de manière à ce que les longueurs des lampes de type tige (320a, 320b) diminuent ou augmentent progressivement dans une direction de transfert de la feuille d'électrode (E).

7. Appareil de séchage de feuille d'électrode selon la revendication 1, comprenant en outre un dispositif de commande (350) configuré pour commander les opérations de rayonnement d'ondes électromagnétiques de la pluralité de lampes de type tige (320a, 320b),
dans lequel le dispositif de commande (350) est configuré pour diviser la pluralité de lampes de type tige (320a, 320b) en une pluralité de groupes de lampes sur la base de longueurs de lampe et commander des opérations de rayonnement d'ondes électromagnétiques selon la pluralité de groupes de lampes.

8. Appareil de séchage de feuille d'électrode selon la revendication 7, comprenant en outre un capteur de détection de largeur (360) conçu pour détecter une largeur de la feuille d'électrode (E),
dans lequel le dispositif de commande (350) est configuré pour déterminer un groupe de lampes dont l'opération de rayonnement d'ondes électromagnétiques doit être effectuée ou arrêtée parmi la pluralité de groupes de lampes en se référant à la largeur de la feuille d'électrode (E) détectée par le capteur de détection de largeur (360).

9. Appareil de séchage de feuille d'électrode selon la revendication 7, comprenant en outre un capteur de température (370) configuré pour détecter des températures d'au moins les deux parties de bord parmi des parties de la feuille d'électrode (E) à sécher,
dans lequel le dispositif de commande (350) est configuré pour déterminer un groupe de lampes dont l'opération de rayonnement d'ondes électromagnétiques doit être effectuée ou arrêtée parmi la pluralité de groupes de lampes en se référant aux températures des deux parties de bord détectées par le capteur de température (370).

10. Système de fabrication d'électrode destiné à fabriquer une électrode en utilisant l'appareil de séchage de feuille d'électrode selon l'une quelconque des revendications 1 à 9.

11. Système de fabrication d'électrode (10A) selon la revendication 10, dans lequel le système de fabrication d'électrode (10A) comprend une pluralité d'appareils de séchage de feuille d'électrode (300' 300"), et comprend en outre :
une première unité de transfert (100A) configurée pour, dans un premier mode de fonctionnement du système de fabrication d'électrode, transférer une première feuille d'électrode (E1) vers un premier appareil de séchage de feuille d'électrode (300') parmi la pluralité d'appareils de séchage de feuille d'électrode et sécher la première feuille d'électrode (E1) ; et
une deuxième unité de transfert (100B) configurée pour, dans le premier mode de fonctionnement, transférer une deuxième feuille d'électrode (E2) vers un second appareil de séchage de feuille d'électrode (300") parmi la pluralité d'appareils de séchage de feuille d'électrode et sécher la deuxième feuille d'électrode (E2).

12. Système de fabrication d'électrode selon la revendication 11, comprenant en outre une troisième unité de transfert (500) configurée pour fournir une ligne de transfert de feuille d'électrode entre le premier appareil de séchage de feuille d'électrode (300') et le second appareil de séchage de feuille d'électrode (300"),
dans lequel, lorsque le mode de fonctionnement du système de fabrication d'électrode passe du premier mode de fonctionnement à un second mode de fonctionnement, la première unité de transfert (100A) est configurée pour transférer une troisième feuille d'électrode vers le premier appareil de séchage de feuille d'électrode (300') et sécher principalement la troisième feuille d'électrode, et la troisième unité de transfert (500) est configurée pour transférer la troisième feuille d'électrode qui a été principalement séchée vers le second appareil de séchage de feuille d'électrode (300") et sécher ensuite la troisième feuille d'électrode.
